Europäisches Patentamt

European Patent Office

Office européen des brevets

(19)

(11) EP 0 616 435 B1

(12) **EUROPÄISCHE PATENTSCHRIFT**

(45) Veröffentlichungstag und Bekanntmachung des Hinweises auf die Patenterteilung:
26.05.1999 Patentblatt 1999/21

(51) Int Cl.⁶: **H04B 7/005**

(21) Anmeldenummer: **94103437.3**

(22) Anmeldetag: **07.03.1994**

(54) **Verfahren zur Sendeleistungsregelung einer Mobilstation in einem zellularen Mobilfunknetz**

Method for transmitter power control of a mobile in a cellular mobile radio network

Procédé de commande de la puissance d'émission d'une station mobile dans un réseau radio mobile cellulaire

(84) Benannte Vertragsstaaten:
**DE FR GB IT SE**

(30) Priorität: **19.03.1993 DE 4308904**

(43) Veröffentlichungstag der Anmeldung:
**21.09.1994 Patentblatt 1994/38**

(73) Patentinhaber: **SIEMENS AKTIENGESELLSCHAFT
80333 München (DE)**

(72) Erfinder:
• **Ivanov, Kolio, Dr.
  D-81369 München (DE)**
• **Metzner, Norbert
  D-91757 Treuchtlingen (DE)**

(56) Entgegenhaltungen:
**GB-A- 2 229 609**

• **PROCEEDINGS GLOBECOM 92 - IEEE GLOBAL TELECOMMUNICATIONS CONFERENCE 6-9 December 1992, Orlando (US) NEW YORK (US)**

**Beschreibung**

Die Erfindung bezieht sich auf ein Verfahren zur Sendeleistungsregelung einer Mobilstation in einem zellularen Mobilfunknetz mit Basisstationen in einer gegenseitigen räumlichen Anordnung.

In zellularen Mobilfunknetzen haben Gleichkanal- und Nebenkanalstörungen primär Einfluß auf die Empfangsqualität des Nutzsignals. Um diese Gleichkanal- und Nebenkanalstörungen auf möglichst geringem Niveau zu halten, kann die Sendeleistung der Mobilstation und/oder der Basisstation unter Berücksichtigung der Kanalgüte geregelt werden. Eine Herabsetzung der Sendeleistung von Funkverbindungen mit hoher Kanalgüte auf einen Pegel, bei dem noch eine hinreichende Empfangsqualität gewährleistet ist, führt zu einer Reduktion der Gleichkanal- und Nebenkanalstörungen auf anderen Funkverbindungen und somit zur Verbesserung der Empfangsqualitat dieser Funkverbindungen. Durch die Verbesserung der Störsituation in zellularen Mobilfunknetzen kann der Frequenzwiederholabstand verringert und somit die Kapazität des Netzes gesteigert werden.

Für die Mobilstation ist es weiterhin wichtig, die Sendeleistung auf einen minimal notwendigen Pegel zu reduzieren, um mit der vorhandenen Energie wirtschaftlich umzugehen. Dies ermöglicht eine längere Betriebsdauer oder auch kleinere, leichtere Mobilgerate.

Die Regelung der Sendeleistung der Mobilstation soll so aktuell und genau wie möglich erfolgen, um die Qualität der zu übertragenden Daten auf einem festgelegten Niveau zu halten. Dadurch können die Gleichkanal- und Nebenkanalstörungen auf einem geringem Pegel gehalten sowie die Energie der Mobilstation wirtschaftlich eingesetzt werden.

Als problematisch hat sich bei bisherigen Verfahren die lange Zeitdauer zwischen Erfassung der Meßwerte und Anpassung der Sendeleistung erwiesen. So vergehen z.B. bei GSM von der Erfassung des ersten Meßwertes in der Basisstation bis zur Anpassung der Sendeleistung der Mobilstation ca. 2 sec, unter Umständen sogar bis zu 3 sec. Bewegt sich die Mobilstation z.B. mit einer Geschwindigkeit von 30 km/h, so legt sie in einer Sekunde bereits 8,4 m zurück; d.h. bei Wellenlängen von einigen Zentimetern (GSM:f = 900 MHz ⇔ λ = 33 cm, UMTS: f = 200 MHz ⇔ λ = 15 cm) haben sich die Ausbreitungsverhältnisse und somit die Kanalgüte bereits nachhaltig geändert. Es erfolgt eine Anpassung der Sendeleistung an Ausbreitungsverhältnisse, die bereits nicht mehr relevant sind. Daher ist eine möglichst aktuelle Anpassung, d.h. eine verzögerungsfreie Regelung der Sendeleistung der Mobilstation anzustreben.

Andererseits wird der Zeitzyklus der Regelung nach unten durch eine notwendige Mindest-Meßperiode begrenzt, um das System nicht durch kurzfristige und lokale Veränderungen der Ausbreitungsverhältnisse zu destabilisieren. Eine Regelung, die selbst das schnelle Fading (Rayleigh, Rice) ausregeln wollte, führt zur Instabilität des Systems. Daher sind die Einflüsse des schnellen Fadings herauszufiltern (z.B. durch eine geeignete Mittelung), damit der Regelalgorithmus für path loss (Ausbreitungsverluste) und slow fading wirksam ist, das in erster Linie durch Abschattungen und Reflektionen entsteht.

Der Erfindung liegt die Aufgabe zugrunde, ein Verfahren anzugeben mit dem die Sendeleistung einer Mobilstation so verzugslos, so genau und so stabil wie möglich geregelt werden kann.

Diese Aufgabe wird gemäß der Erfindung gelost durch die im kennzeichnenden Teil von Anspruch 1 angegebenen Merkmale.

Das erfindungsgemäße Verfahren basiert dabei auf einem hierarchischen System mit zwei Schichten der Steuerungsfunktionen. Dabei wird auf der oberen Schicht eine langfristige Regelung (Reaktionszeit T1) vorgenommen sowie die Parameter für die auf der unteren Schicht implementierte direkte, kurzfristige Regelung mit einer Reaktionszeit von T2 < T1 ermittelt. Die obere Schicht umfaßt Basisstation und Mobilstation und stellt eine geschlossene Regelschleife mit signifikanten Totzeiten dar, während sich die untere Schicht ausschließlich in der Mobilstation befindet und eine lokale Steuerfunktion darstellt. Die obere Schicht regelt aufgrund von Messungen des Uplink und der vorgegebenen Schwellwerte der Betriebsund Ablaufsteuerung (O & M-Parameter; Operation & Maintenance) in der Basisstation die Langzeit-Sendeleistung $\overline{P}_{t,ul}$ der Mobilstation und bestimmt ferner die Parameter der lokalen Steuerfunktion der Mobilstation. Diese Steuerfunktion ist dadurch in der Lage, basierend auf Messungen des Downlink, schnellere Änderungen ihrer Uplink-Sendeleistung vorzunehmen als es der langsame Regelkreis zuläßt. Da der Rückschluß von Downlink-Eigenschaften auf die des Uplink in einem Frequenz-Duplex-System nur begrenzt zulässig ist, stellen die obengenannten Parameter im wesentlichen eine Aussage über die Zulässigkeit der Reziprozitätsannahme dar.

Durch die erfindungsgemäßen Maßnahmen wird eine relativ schnelle Reaktion der kritischen Mobilstations-Sendeleistung auf sich ändernde Ausbreitungsbedingungen durch Verlagerung begrenzter Entscheidungsbefugnis vom Netzwerk in die Mobilstation erreicht. Zudem werden instabile Systemzustände durch Berücksichtigung eines - von der Basisstation - beschränkten und kontrollierten Steuerbereichs verhindert. Ein wesentlicher Vorteil besteht weiterhin in der Beschränkung des Signalisierungsaufwandes durch Anwendung eines Reziprozitätskriteriums.

Die Adaptivität des Verfahrens an verschiedene Zellgrößen und Datenraten ist durch variable Filterparameter möglich, ebenso durch einen Eingriff von außen (O & M-Parameter) sowie durch die Anwendbarkeit bei Zuweisung mehrerer Zeitschlitze innerhalb eines Rahmens für eine Verbindung.

Die Sendeleistung $P_{t,ul}$ der Mobilstation wird dabei nach folgenden Daten gesteuert: Durch die von der Basisstation vorgegebene Langzeit-Sendeleistung $\overline{P}_{t,ul}$, einen von der Basisstation ermittelten Parameter für die kurzfristige Regelung unter Benutzung eines Identifikators für die Reziprozität des Funkkanals sowie einen gefilterten Pegel und Qualität des Empfangssignals (Downlink).

Vorteilhafte Ausgestaltungen und Weiterbildungen des Erfindungsgegenstands sind in den Unteransprüchen angegeben.

Nachstehend wird die Erfindung anhand eines in der Zeichnung dargestellten Ausführungsbeispiels näher erläutert.

Es zeigen:

Fig. 1    in einem Blockschaltbild eine Einrichtung zur Durchführung des Verfahrens zur Sendeleistungregelung einer Mobilstation und

Fig. 2    eine Darstellung des zeitlichen Verlaufs der Mobilstationssendeleistung sowie des Zusammenhanges zwischen Meßwerterfassung und Sendeleistungssteuerung (K=4 als Beispiel)

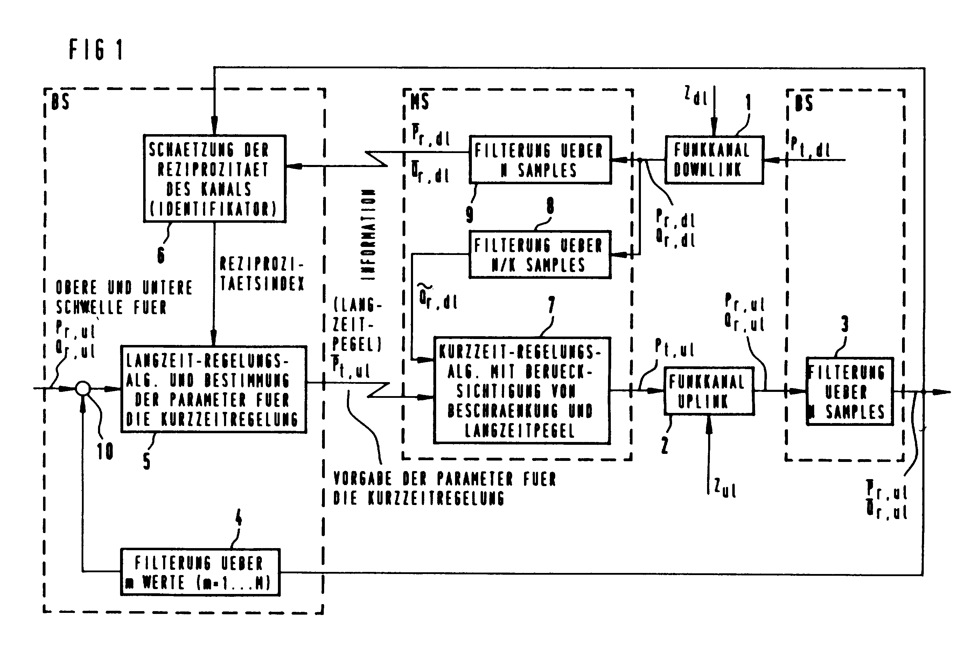

In Figur 1 sind die Mobilstation MS und die Basisstation BS jeweils durch strichliert gezeichnete Kästchen dargestellt, wobei für eine übersichtliche Darstellung der Regelkreise die Basisstation BS beiderseits der Mobilstation MS eingezeichnet ist. Zwischen Basisstation und Mobilstation liegt der Funkkanal 1 (Downlink) in der entgegengesetzten Übertragungsrichtung von der Mobilstation MS zur Basisstation BS der Funkkanal 2 (Uplink). Die auf dem Funkkanal auftretenden Störungen sind mit $Z_{dl}$ bzw. $Z_{ul}$ bezeichnet und durch einen auf die jeweiligen Kästchen 1 und 2 gerichteten Pfeil markiert.

Die Steuerung der Langzeit-Sendeleistung $\overline{P}_{t,ul}$ der Mobilstation MS erfolgt in der Basisstation aufgrund folgender Größen:
über N Samples ($\triangleq$ T1) gefilterte Empfangsleistung $P_{r,ul}$ und N Samples ($\triangleq$ T1) gefilterte Empfangsqualität $Q_{r,ul}$ des Uplink, wobei die Filterung (z.B. Mittelung) im Filter 3 der Basisstation BS erfolgt sowie über die als O & M-Parameter vorgegebenen Schwellwerte für diese beiden Größen. Diese werden als obere und untere Schwelle für Empfangsleistung und Empfangsqualität auf einen zweiten Eingang eines Subtraktionsgliedes 10 gegeben, das ausgangsseitig mit einem den Langzeit-Regelungs-Algorithmus und Bestimmung der Parameter für die Kurzzeitregelung enthaltenden Kästchen 5 verbunden ist. Die ermittelten Werte der Empfangsleistung und Empfangsqualität am Ausgang des Filters 3 können noch einer weiteren Filterung, z.B. einer gleitenden Mittelung, über m-Werte unterworfen werden. Dies erfolgt in dem im Verbindungsweg zwischen Filterausgang 3 und Subtraktionsglied 10 der Basisstation angeordneten Filter 4. Der O & M-Parameter m ist unter anderem vom Zelltyp und der Zellgröße abhängig.

Beim erfindungsgemäßen Verfahren wird zusätzlich in der Basisstation aus den von ihr selbst ermittelten Filterergebnissen $\overline{P}_{r,ul}$ und $\overline{Q}_{r,ul}$ sowie aus den ihr von der Mobilstation mitgeteilten Daten der gefilterten Empfangswerte $\overline{P}_{r,dl}$ und $\overline{Q}_{r,dl}$ des Downlink eine Aussage über die Reziprozität des Funkkanals getroffen. Diese Schätzung der Reziprozität des Kanals (Identifikation) erfolgt in der im Verbindungsweg von Filter 3 und Einrichtung 5 angeordneten Einrichtung 6. Das Ergebnis der Schätzung wird als Reziprozitätsindex der Einrichtung 5 zugeführt und unverändert zusammen mit dem Langzeitpegel $\overline{P}_{t,ul}$ als Vorgabe der Parameter für die Kurzzeitregelung der Mobilstation MS übermittelt, die eine Einrichtung 7 für den Kurzzeit-Regelungs-Algorithmus unter Berücksichtigung von Beschränkung und Langzeitpegel enthält.

Um die Sendeleistung $P_{t,ul}$ der Mobilstation MS so realitätsnah wie möglich steuern zu können, wird der Mobilsstation MS begrenzte Entscheidungsbefugnis übertragen. Zur Limitierung des damit verbundenen Signalisierungsaufwandes fußt die Steuerung der in der Mobilstation implementierten unteren Schicht auf Messungen des Downlink. Hierfür wird die Empfangsqualitht $Q_{r,dl}$ in der Mobilstation MS über N/K-Samples ($\triangleq$ T2) gefiltert. K ist ein O & M-Parameter, der nach oben durch die Ausfilterung des fast-fading begrenzt wird, d.h. eine Mindestanzahl von Samples ist erforderlich, um das fast-fading auszufiltern und das slow-fading verläßlich zu ermitteln. Gleichzeitig ist K ein Maß für die Aktualität der Steuerung, d.h. für K = 1 erfolgt die Steuerung nur nach dem Langzeitwert $\overline{P}_{t,ul}$ mit den vorstehend erwähnten Nachteilen. Das gefilterte Ausgangssignal $\tilde{Q}_{r,dl}$ des Filters 8 wird auf einen Eingang der Einrichtung 7 gegeben.

Da der Mobilstation die globale Ausbreitungssituation nicht bekannt ist, wird dem Kurzzeit-Regelungs-Algorithmus der vorstehend bereits behandelte Identifikator übergeordnet, mit dem die zulässige Richtung und die maximale Änderung der Kurzzeit-Sendeleistung $P_{t,ul}$ bestimmt werden. Zusätzlich kann als weiterer stabilisierender Faktor die zulässige Anderungsrichtung und der maximal zulässige Betrag von der Art und Höhe der letzten Änderung von $\overline{P}_{t,ul}$ abhängig gemacht werden.

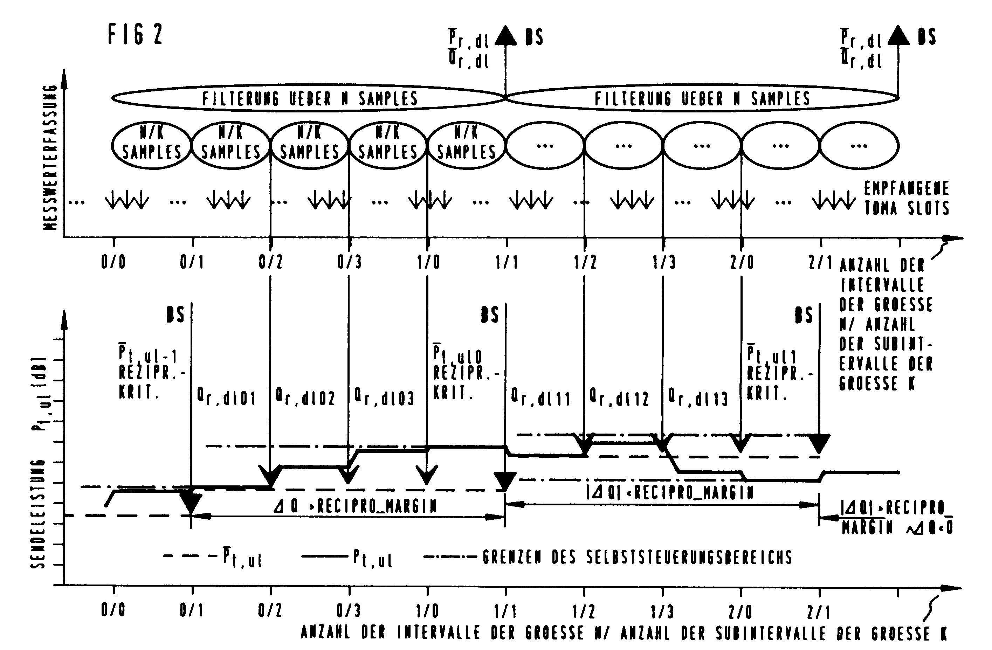

Wird die Sendeleistung der Basisstation zeitlich unmittelbar nach Empfang und Verarbeitung der ihr von der Mobilstation übermittelten Werte von Empfangsleistung $\overline{P}_{r,dl}$ und Empfangsqualität $\overline{Q}_{r,dl}$ geregelt, so ist in der Mobilstation ein Algorithmus unter Berücksichtigung der sich ändernden Basisstations-Sendeleistung zu implementieren. Ein einfaches Beispiel ist die in Figur 2 mit der Darstellung des zeitlichen Verlaufs der Mobilstations-Sendeleistung $P_{t,ul}$ sowie des Zusammenhanges zwischen Meßwerterfassung und Sendeleistungssteuerung in der Mobilstation für K = 4 angedeutete Möglichkeit zur Unterdrückung des ersten N/K-Intervalls eines N-Intervalls. Dadurch kann auch ein zusätzlicher Signalisierungsaufwand entfallen.

Im einzelnen zeigt die Darstellung in Figur 2 im unteren Bereich die Sendeleistung $P_{t,ul}$ über der Anzahl der Intervalle der Größe N zur Anzahl der Subintervalle der Größe K. Darüber ist die Meßwerterfassung in entsprechender funktioneller Abhängigkeit dargestellt. Bei der Meßwerterfassung ist im oberen Bereich die Filterung über N-Samples eingezeichnet (vergl. Filter 9 in Figur 1) und darunterliegend die Filterung über N/K-Samples (vergl. Filter 8 in Figur 1). Entsprechend dem für K gewählten Faktor 4 befinden sich 4 N/K-Samples innerhalb des Bereichs für die Filterung über N-Samples. Nach jeweils N-Samples werden die Meßwerte der gefilterten Empfangsleistung $\overline{P}_{r,dl}$ und Empfangsqualität $\overline{Q}_{r,dl}$ an die Basisstation übermittelt.

In dem darunterliegenden Diagramm für die Sendeleistung ist gezeigt, daß nach Ablauf des ersten N/K-Intervalls von der Basisstation der Langzeitpegel $\overline{P}_{t,ul}$ und das Reziprozitätskriterium als Parameter für die Kurzzeitregelung zur Mobilstation übermittelt werden. In den darauffolgenden 3 N/K-Intervallen erfolgt die Regelung in der Mobilstation selbst durch die die Kurzzeit-Regelung steuernde Empfangsqualität $\widetilde{Q}_{r,dl}$ als Ausgangsgröße der Filterung über N/K-Samples (vergl. Filter 8 in Figur 1). Nach Ablauf des ersten N/K-Intervalls im zweiten Abschnitt der Filterung über N-Samples wird erneut von der Basisstation der Langzeitpegel mit der Vorgabe der Parameter für die Kurzzeitregelung (Reziprozitätskriterium) an die Mobilstation übermittelt. In den drei nachfolgenden N/K-Intervallen erfolgt wiederum die Kurzzeitregelung durch die Mobilstation selbst über die Empfangsqualität $\widetilde{Q}_{r,dl}$.

Die nachfolgenden Ausführungen dienen der Ermittlung des Reziprozitätskriteriums. Hierfür gilt, daß aus den verfügbaren Informationen über Up- und Downlink mittels eines geeigneten Algorithmus auf die Reziprozität des Kanals zu schließen ist. Außerdem können Vorgaben von einer übergeordneten Instanz eingearbeitet werden, z. B. O & M-Parameter. Ein einfacher, aber trotzdem effizienter Algorithmus wird im folgenden als Beispiel erläutert:

Aus den gefilterten Qualitätswerten der Funkverbindungen BS → MS ($\overline{Q}_{r,dl}$) und MS → BS ($\overline{Q}_{r,ul}$) wird die Differenz gebildet: $\Delta Q = \overline{Q}_{r,ul} - \overline{Q}_{r,dl}$. Ist die Differenz dem Betrage nach kleiner oder gleich als ein O & M-Parameter, so ist es der Mobilstation erlaubt, ihre Sendeleistung innerhalb einer vorgegebenen Bandbreite selbst zu steuern. Diese Bandbreite sollte relativ eng gefaßt werden. Ist $\Delta Q$ positiv und größer als dieser O & M-Parameter, d.h. die Qualität des Uplinks ist besser als die des Downlinks, so kann die Mobilstation ihre Sendeleistung nur innerhalb einer vorgegebenen Grenze reduzieren. Diese Grenze kann größer sein, als die vorher erwähnte Bandbreite. Ist $\Delta Q$ negativ und betragsmäßig größer als der O & M-Parameter, d.h. die Qualität des Downlinks ist besser als die des Uplinks, so kann die Mobilstation ihre Sendeleistung nur innerhalb einer vorgegebenen Grenze erhöhen. Diese Grenze sollte größer als im vorhergehenden Fall sein (vergleiche hierzu den Verlauf der Sendeleistung $P_{t,ul}$ im unteren Diagramm von Figur 2).

**Patentansprüche**

1. Verfahren zur Sendeleistungsregelung einer Mobilstation in einem zellularen Mobilfunknetz mit Basisstationen in einer gegenseitigen räumlichen Anordnung,
   **gekennzeichnet durch**

   ein aus zwei Schichten bestehendes hierarchisches System derart, daß in der oberen Schicht, die eine eine Basisstation und eine Mobilstation umfassende geschlossene Regelschleife bildet, die Regelung der Langzeit-Sendeleistung ($\overline{P}_{t,ul}$) der Mobilstation in der Basisstation erfolgt und daß zusätzlich in der Basisstation eine Aussage über die Entscheidungsbefugnis der unteren Schicht getroffen und diese der Mobilstation übermittelt wird,
   und daß in der unteren Schicht, die eine in der Mobilstation implementierte lokale Regelung darstellt, unter Berücksichtigung der von der Basisstation ermittelten Langzeit-Sendeleistung und der Aussage über die Entscheidungsbefugnis der unteren Schicht die Kurzzeit-Sendeleistung $\overline{P}_{t,ul}$ der Mobilstation ermittelt wird.

2. Verfahren nach Anspruch 1,
   **dadurch gekennzeichnet,**

   daß die Regelung der Langzeit-Sendeleistung ($\overline{P}_{t,ul}$) der Mobilstation in der Basisstation erfolgt auf der Basis der jeweils über N samples gefilterten Empfangsleistung ($P_{r,ul}$) und Empfangsqualität ($Q_{r,ul}$) des Uplink, die gegebenenfalls einer weiteren Filterung unterworfen werden, sowie als Operation & Maintenance Parameter vorgegebenen Schwellwerten für beide Größen, und daß zusätzlich aus den der Basisstation zur Regelung ihrer Sendeleistung bekannten, über ebenfalls jeweils N samples gefilterten Werten der Empfangsleistung und der Empfangsqualität des Downlink ($P_{r,dl}$, $Q_{r,dl}$) sowie den bereits genannten Empfangswerten ($P_{r,ul}$, $Q_{r,ul}$) der Mobilstation eine Schätzung über die Reziprozität des Übertragungskanals getroffen und diese der Mobilstation übermittelt wird, und daß ferner die in der Mobilstation implementierte lokale Regelung auf der Basis von Messungen der Empfangswerte der Mobilstation erfolgt, indem die über N/K Samples, wobei K ein Operation & Maintenance - Parameter ist gefilterte Empfangsqualitat ($Q_{r,dl}$) mit dem übergeordneten Identifikator, aus dem die zulässige Tendenz und maximal zulässige Abweichung der Kurzzeit-Sendeleistung ($P_{t,ul}$) von der vorgegebenen Langzeit-Sendeleistung ($\overline{P}_{t,ul}$) abgeleitet werden, in dem Kurzzeit-Regelungs-Algorithmus zur Berechnung der Kurzzeit-Sendeleistung ($P_{t,ul}$) der Mobilstation verarbeitet werden.

**3.** Verfahren nach Anspruch 1 oder 2,
**dadurch gekennzeichnet,**

daß der Faktor K nach oben durch die Ausmittelung des fast-fading begrenzt ist.

**4.** Verfahren nach einem der Ansprüche 1 bis 3,
**dadurch gekennzeichnet,**

daß die zulässige Änderungsrichtung und der maximal zulässige Betrag von der Art und Höhe der letzten Änderung der Langzeit-Sendeleistung ($\overline{P}_{t,ul}$) der Mobilstation abhängig gemacht werden.

**5.** Verfahren nach einem der Ansprüche 1 bis 4,
**dadurch gekennzeichnet,**

daß zur Ermittlung des Reziprozitätskriteriums aus den gemittelten Qualitätswerten der Funkverbindungen Basisstation zu Mobilstation und Mobilstation zu Basisstation die Differenz gebildet wird und für den Fall, daß diese Differenz dem Betrag nach kleiner oder gleich als ein Operation & Maintenance-Parameter ist, die Mobilstation ihre Sendeleistung innerhalb einer vorgegebenen Bandbreite selbst steuern kann, für den Fall, daß die Differenz positiv und betragsmäßig größer als der Operation & Maintenance-Parameter ist, die Mobilstation ihre Sendeleistung nur innerhalb einer vorgegebenen Grenze reduzieren kann und für den Fall, daß die Differenz negativ und betragsmäßig größer als der Operation & Maintenance-Parameter ist, die Mobilstation ihre Sendeleistung nur innerhalb einer vorgegebenen Grenze erhöhen kann.

**Claims**

**1.** Method of regulating the transmission power of a mobile station in a cellular mobile radio network with base stations in a mutual spatial arrangement, **characterized in that**

a hierarchical system consisting of two layers such that in the upper layer, which forms a closed control loop including a base station and a mobile station, the control of the long-term transmission power ($\overline{P}_{t,ul}$) of the mobile station is exercised in the base station and that additionally in the base station a statement of the competence of the lower layer is made and this is transmitted to the mobile station,
and that in the lower layer, which forms a local control implemented in the mobile station, the short-term transmission power $P_{t,ul}$ of the mobile station is determined taking account of the long-term transmission power determined by the base station and the statement of the competence of the lower layer.

**2.** Method in accordance with claim 1
**characterized in that**

the regulation of the long-term transmission power ($\overline{P}_{t,ul}$) of the mobile station is implemented in the base station on the basis of the reception power ($P_{t,ul}$) and reception quality ($Q_{r,ul}$) of the uplink, filtered in each case using N samples, which if necessary is subjected to further filtering, as well as of threshold values for both variables stipulated as Operation & Maintenance parameters, and that, additionally, from the base station for control of its transmission power known values, filtered in each case using N samples, of the reception power and reception quality of the downlink ($P_{r,dl}$, $Q_{r,dl}$) as well as the already-known reception values ($P_{r,ul}$, $Q_{r,ul}$) of the mobile station are used to estimate the reciprocity of the transmission channel and this is transmitted to the mobile station, and furthermore the local control in the mobile station is implemented on the basis of the measurements of the reception values of the mobile station, in that the reception quality ($Q_{r,dl}$), filtered using N/K samples, where K is an Operation & Maintenance parameter, with the overriding identifier, from which the permissible trend and maximum permissible deviation of the short-term transmission power ($P_{t,ul}$) is derived from the specified long-term transmission power ($\overline{P}_{t,ul}$), is processed in the short-term control algorithm to calculate the short-term transmission power ($P_{t,ul}$) of the mobile station.

**3.** Method in accordance with claims 1 or 2
**characterized in that**

the upper limit of the factor K is fixed by the averaging of the fast fading.

**4.** Method in accordance with one of claims 1 to 3
**characterized in that**

the permissible change in direction and the maximum permissible amount is made dependent on the type and level of the last change of the long-term transmission power ($\overline{P}_{t,ul}$) of the mobile station.

5. Method in accordance with one of claims 1 to 4 **characterized in that**

to determine the reciprocity criterion from the averaged quality values of the base station to mobile station and mobile station to base station radio links, the difference is formed and where the amount of this difference is less than or equal to an Operation & Maintenance parameter, the mobile station can itself control its transmission power within a specified bandwidth, where the difference is positive and the amount is greater than the Operation & Maintenance parameter, the mobile station can reduce its transmission power only within a specified limit and where the difference is negative and the amount greater than the Operation & Maintenance parameter the mobile station can only increase its transmission power within a specified limit.

**Revendications**

1. Procédé de commande de la puissance d'émission d'une station mobile dans un réseau radio mobile cellulaire comprenant des stations de base dans une disposition spatiale réciproque, caractérisé par un système hiérarchique composé de deux couches, de manière à réaliser dans la couche supérieure qui forme une boucle de régulation fermée comprenant une station de base et une station mobile, dans ladite station de base, la commande de la puissance d'émission de longue durée ($\overline{P}_{t,ul}$) de la station mobile et à ajouter dans la station de base une déclaration sur le pouvoir de décision de la couche inférieure, qui est transmise à la station mobile, et à déterminer dans la couche inférieure qui constitue une commande locale mise en oeuvre dans la station mobile, la puissance de commande de courte durée $P_{t,ul}$ de la station mobile, en tenant compte de la puissance d'émission de longue durée déterminée par la station de base et de la déclaration sur le pouvoir de décision de la couche inférieure.

2. Procédé selon la revendication 1, caractérisé en ce qu'on réalise la commande de la puissance d'émission de longue durée ($\overline{P}_{t,ul}$) de la station mobile dans la station de base, sur la base de la puissance de réception ($P_{r,ul}$) et de la qualité de réception ($Q_{r,ul}$) filtrées par N samples et, le cas échéant, soumises à un autre filtrage, du uplink, et de valeurs de seuil prédéterminées sous forme de paramètres d'opération et de maintenance pour les deux grandeurs, et en ce qu'on procède en outre, sur la base des valeurs de la puissance de réception et de la qualité de réception du downlink ($P_{r,dl}$ $Q_{r,dl}$) connues de la station de base pour commander sa puissance d'émission et filtrées elles aussi par N samples, et des valeurs de réception ($P_{r,ul}$, $Q_{r,ul}$) déjà citées de la station mobile, à une estimation de la réciprocité du canal de transmission, qui est transmise à la station mobile, et en ce qu'on réalise la commande locale mise en oeuvre dans la station mobile sur la base de mesures des valeurs de réception de la station mobile, en traitant la qualité de réception ($Q_{r,dl}$) filtrée par N/K samples - K étant un paramètre d'opération et de maintenance - avec l'identificateur prioritaire, duquel on déduit le sens admissible et l'écart maximal admissible de la puissance d'émission de courte durée ($P_{t,ul}$) par rapport à la puissance d'émission de longue durée prédéterminée ($\overline{P}_{t,ul}$), dans l'algorithme de commande de courte durée pour calculer la puissance d'émission de courte durée ($P_{t,ul}$) de la station mobile.

3. Procédé selon la revendication 1 ou 2, caractérisé en ce que le facteur K est limité vers le haut par la moyenne du fastfading.

4. Procédé selon l'une des revendications 1 à 3, caractérisé en ce qu'on subordonne le sens de modification admissible et la valeur maximale admissible à la nature et l'importance de la dernière modification de la puissance d'émission de longue durée ($\overline{P}_{t,ul}$) de la station mobile.

5. Procédé selon l'une des revendications 1 à 4, caractérisé en ce que pour déterminer le critère de réciprocité, on forme la différence des valeurs moyennes de qualité des liaisons radio station de base/ station mobile et station mobile/station de base, et si la valeur de cette différence est inférieure ou égale à un paramètre d'opération et de maintenance, la station mobile peut commander elle-même sa puissance d'émission dans les limites d'une largeur de bande donnée, si la différence est positive et sa valeur supérieure au paramètre d'opération et de maintenance, la station mobile ne peut diminuer sa puissance d'émission que dans des limites données et si la différence est négative et sa valeur supérieure au paramètre d'opération et de maintenance, la station mobile ne peut augmenter sa puissance d'émission que dans des limites données.

FIG 1

BS

FUNKKANAL DOWNLINK — 1
$z_{dl}$

$P_{t,dl}$

FILTERUNG UEBER M SAMPLES — 3
$P_{r,ul}$ $Q_{r,ul}$

$P_{r,ul}$ $Q_{r,ul}$

FUNKKANAL UPLINK — 2
$z_{ul}$
$P_{t,ul}$

MS

FILTERUNG UEBER M SAMPLES — 9
$P_{r,dl}$
$Q_{r,dl}$

FILTERUNG UEBER M/K SAMPLES — 8

KURZZEIT-REGELUNGS-ALG. MIT BERUECK-SICHTIGUNG VON BESCHRAENKUNG UND LANGZEITPEGEL — 7
$\tilde{Q}_{r,dl}$

$P_{r,dl}$ $Q_{r,dl}$

VORGABE DER PARAMETER FUER DIE KURZZEITREGELUNG

INFORMATION

(LANG-ZEIT-PEGEL) $\overline{P}_{t,ul}$

BS

SCHAETZUNG DER REZIPROZITAET DES KANALS (IDENTIFIKATOR) — 6

REZIPROZI-TAETSINDEX

LANGZEIT-REGELUNGS-ALG. UND BESTIMMUNG DER PARAMETER FUER DIE KURZZEITREGELUNG — 5

FILTERUNG UEBER m WERTE (m-1...M) — 4

10

OBERE UND UNTERE SCHWELLE FUER $P_{r,ul}$ $Q_{r,ul}$

FIG 2